# EUROPÄISCHE PATENTANMELDUNG

(11) **EP 4 467 438 A1**
(43) Veröffentlichungstag der Anmeldung: **27.11.2024**
(21) Anmeldenummer: 24172393.1
(22) Anmeldetag: 25.04.2024
(51) Int. Cl.: B62M 6/80, B60L 50/20

(54) **STEUEREINHEIT UND VERFAHREN ZUM EINSATZ IN EINEM ZWISCHENKREIS**

(30) Priorität: 22.05.2023 DE 102023113286
(71) Anmelder: MOVARIA GmbH, 80339 München (DE)
(72) Erfinder: Ballendat, Felix, 80339 München (DE); Karbaumer, Jakob, 80339 München (DE)
(74) Vertreter: Flocke, Ben Amade Matthias

(57) **Zusammenfassung**

Die Erfindung betrifft Steuereinheit (1) zum Einsatz in einem Zwischenkreis (110) eines Fahrzeugs, wobei der Zwischenkreis (110) einen Generator (120) und einen elektrischen Antrieb (130) elektrisch verbindet, aufweisend: ein Regelungsmodul (2), das dazu konfiguriert ist, einen Sollwert als Führungsgröße (w) und einen Istwert als Regelgröße (x) zu empfangen und eine Steuergröße (u) auszugeben, wobei die Regelgröße (x) und die Führungsgröße (w) dieselbe physikalische Dimension haben; ein Auswertemodul (3), das dazu konfiguriert ist, aus der Steuergröße (u) eine Stellgröße (y) zu bestimmen, die die Regelgröße (x) zumindest mittelbar derart beeinflusst, dass sich der Istwert dem Sollwert annähert; eine Generatorschnittstelle (4), die dazu konfiguriert ist, von dem Generator (120) einen Generatorparameter, insbesondere einen Wert einer Generatorleistung, zu empfangen; und eine Antriebsschnittstelle (5), die dazu konfiguriert ist, mit dem elektrischen Antrieb (130) zu kommunizieren; wobei die Steuereinheit (1) dazu konfiguriert ist, eine Zwischenkreisspannung (UZ), die in dem Zwischenkreis (110) anliegt, zu ermitteln und als Regelgröße (x) heranzuziehen. Die Erfindung betrifft ferner ein Verfahren zum Anpassen einer Antriebsleistung eines elektrischen Antriebs (130) eines Fahrzeugs an eine Ausgangsleistung eines Generators (120) des Fahrzeugs.

## Beschreibung

### Technisches Gebiet

Die vorliegende Erfindung betrifft eine Steuereinheit zum Einsatz in einem Zwischenkreis eines Fahrzeugs, insbesondere eines kettenlosen Lastenfahrrads, wobei der Zwischenkreis einen Generator und einen elektrischen Antrieb elektrisch verbindet. Die Erfindung betrifft ferner ein Verfahren zum Anpassen einer Antriebsleistung eines elektrischen Antriebs eines Fahrzeugs, insbesondere eines kettenlosen Lastenfahrrads, an eine Ausgangsleistung eines Generators des Fahrzeugs.

### Stand der Technik

Ein kettenloses Lastenfahrrad ist aus der europäischen Patentanmeldung EP 2 876 029 A2 bekannt. Kettenlose Lastenfahrräder werden von einem elektrischen Antrieb angetrieben. Dieser bezieht die für den Antrieb erforderliche Leistung aus einer Antriebsbatterieeinheit. Die Antriebsbatterieeinheit unterstützend kann in einer Tretkurbel des Lastenfahrrads ein Generator vorgesehen sein. Dieser wandelt eine der Tretkurbel zugeführte mechanische Energie in elektrischen Strom. Üblicherweise ist der Anteil der Leistung, den die Antriebsbatterieeinheit dem elektrischen Antrieb zur Verfügung stellt, um ein Vielfaches, insbesondere 10- bis 100-faches, höher als der Anteil der Leistung, den der Generator dem elektrischen Antrieb zur Verfügung stellt. Bei kettenlosen Lastenfahrrädern wird auf eine mechanische Kraftübertragung, beispielsweise in Form einer Fahrradkette, verzichtet.

### Darstellung der Erfindung

Es ist eine Aufgabe der vorliegenden Erfindung, die Nachteile aus dem Stand der Technik zu verringern und eine verbesserte Steuereinheit zum Einsatz in einem Zwischenkreis eines Fahrzeugs, insbesondere eines kettenlosen Lastenfahrrads, und ein verbessertes Verfahren zum Anpassen einer Antriebsleistung eines elektrischen Antriebs eines Fahrzeugs, insbesondere eines kettenlosen Lastenfahrrads, bereitzustellen. Die Erfindung zielt insbesondere darauf ab, ein kettenloses Lastenfahrrad auch dann bewegen zu können, wenn eine Antriebsbatterieeinheit eines kettenlosen Lastenfahrrads keine Leistung zur Verfügung stellt. Ferner zielt die Erfindung insbesondere auf eine robuste Regelung des kettenlosen Lastenfahrrads ab.

Die Aufgabe wird durch eine Vorrichtung und ein Verfahren gemäß den unabhängigen Ansprüchen gelöst. Vorteilhafte Weiterbildungen ergeben sich aus den Unteransprüchen, der Beschreibung und den Figuren.

Entsprechend wird eine Steuereinheit zum Einsatz in einem Zwischenkreis eines Fahrzeugs, insbesondere eines kettenlosen Lastenfahrrads, vorgeschlagen, wobei der Zwischenkreis einen Generator und einen elektrischen Antrieb, beispielsweise einen Elektromotor, elektrisch verbindet. Der Generator kann eine Tretbewegung einer Nutzerin in elektrischen Strom wandeln, welcher wiederum dem elektrischen Antrieb zugeführt wird. Die Steuereinheit hat ein Regelungsmodul, das dazu konfiguriert ist, das heißt dazu konfiguriert und vorgesehen ist, einen Sollwert als Führungsgröße und einen Istwert als Regelgröße zu empfangen und eine Steuergröße auszugeben, wobei die Regelgröße und die Führungsgröße dieselbe physikalische Dimension haben, mithin in derselben physikalischen Einheit, insbesondere Volt, gemessen werden. Die Steuereinheit hat ferner ein Auswertemodul, das dazu konfiguriert ist, aus der Steuergröße eine Stellgröße zu bestimmen, insbesondere zu berechnen, die die Regelgröße zumindest mittelbar derart beeinflusst, dass sich der Istwert dem Sollwert annähert. Die Steuereinheit kann ferner eine Generatorschnittstelle haben, die dazu konfiguriert ist, von dem Generator einen Generatorparameter, insbesondere einen Wert einer Generatorleistung, mithin einer Generatorausgangsleistung, zu empfangen. Die Steuereinheit hat eine Antriebsschnittstelle, die dazu konfiguriert ist, mit dem elektrischen Antrieb zu kommunizieren. Die Steuereinheit ist dazu konfiguriert, eine Zwischenkreisspannung, die in dem Zwischenkreis anliegt, zu ermitteln und als Regelgröße heranzuziehen. Die Zwischenkreisspannung kann über ein Spannungsmessgerät ermittelt werden. Sie kann auch über ein Strommessgerät und nachfolgende Umrechnung ermittelt werden. Das Messgerät kann beispielsweise in die Steuereinheit integriert sein. Die Erfinder haben herausgefunden, dass die Zwischenkreisspannung der entscheidende Parameter ist, um einen Zwischenkreis, dem, insbesondere ausschließlich, eine fluktuierende Tretleistung zugeführt wird, stabil zu halten. Die Steuereinheit ermöglicht es, das Fahrzeug, insbesondere das kettenlose Lastenfahrrad, zuverlässig, ausdauernd und robust zu betreiben, auch wenn dem Zwischenkreis ausschließlich eine fluktuierende Leistung als Eingangsleistung zugeführt wird. So kann beispielsweise ein kettenloses Lastenfahrrad auch dann betrieben werden, wenn eine Antriebsbatterieeinheit keine Leistung zur Verfügung stellt.

In einer Ausführungsform hat die Steuereinheit einen Zustandsdetektor, der dazu konfiguriert ist, zu erkennen, ob eine Antriebsbatterieeinheit aktiv an den Zwischenkreis angeschlossen ist, der Zwischenkreis mithin batteriebetrieben ist. Beispielsweise kann eine Batterieschnittstelle der Steuereinheit mitteilen, ob die Antriebsbatterieeinheit in der Lage ist, dem Zwischenkreis Leistung bereitzustellen, also aktiv an den Zwischenkreis angeschlossen ist. Dies kann beispielsweise nicht der Fall sein, wenn die Antriebsbatterieeinheit entleert, defekt oder entnommen ist. Sobald der Zustandsdetektor erkennt, dass die Antriebsbatterieeinheit aktiv an den Zwischenkreis angeschlossen ist, kann die Steuereinheit in einer ersten Konfiguration arbeiten. Erkennt der Zustandsdetektor, dass die Antriebsbatterieeinheit nicht aktiv an den Zwischenkreis angeschlossen ist, der Zwischenkreis mithin batterielos ist, kann die Steuereinheit in einer zweiten Konfiguration arbeiten. Insbesondere in der zweiten Konfiguration ist die Steuereinheit dazu konfiguriert, die Zwischenkreisspannung als Regelgröße heranzuziehen. Die offenbarungsgemäße Regelung durch das Regelungsmodul und das Auswertemodul der Steuereinheit wird insbesondere nur dann herangezogen, wenn die Antriebsbatterieeinheit nicht aktiv an den Zwischenkreis angeschlossen ist, dieser also batterielos ist. So wird eine effiziente Steuerung und Regelung in sowohl der batteriebetriebenen Konfiguration als auch der batterielosen Konfiguration erreicht.

In einer Ausführungsform ist die Steuereinheit dazu konfiguriert, in dem Zustand, in dem die Antriebsbatterieeinheit nicht aktiv an den Zwischenkreis angeschlossen ist, eine Bremse des elektrischen Antriebs, die ein entgegen der Antriebsrichtung wirkendes, mithin negatives, Drehmoment aufnehmen kann, zu deaktivieren. Unter einem negativen Drehmoment wird ein Drehmoment entgegen der Antriebsrichtung verstanden. Das negative Drehmoment kann daher auftreten, wenn das Fahrzeug während einer Vorwärtsbewegung bremst. Es kann auch auftreten, wenn das Fahrzeug während einer Rückwärtsbewegung bremst. Über die Bremse dieses Drehmoments könnte dem elektrischen Antrieb Leistung entnommen werden und dem Zwischenkreis zugeführt werden, was sich jedoch nachteilhaft auf die Zwischenkreisspannung und auf den Generator auswirken würde. Deshalb deaktiviert die Steuereinheit die Bremse. Sofern ein negatives Drehmoment auftritt, findet daher kein Leistungsaustausch von dem elektrischen Antrieb zu dem Zwischenkreis statt. Die aus dem Drehmoment erzeugbare Leistung wird dem Zwischenkreis also nicht zugeführt.

In einer Ausführungsform weist die Steuereinheit eine Schaltereinrichtung zur Öffnung und Schließung eines Batterieschalters auf, der zwischen der Antriebsbatterieeinheit und dem Zwischenkreis angeordnet ist, wobei die Schaltereinrichtung dazu konfiguriert ist, den Batterieschalter zu öffnen, wenn der Zustandsdetektor erkannt hat, dass die Antriebsbatterieeinheit nicht aktiv an den Zwischenkreis angeschlossen ist, wobei der Batterieschalter insbesondere Bestandteil eines Batteriemanagementsystems der Antriebsbatterieeinheit ist. Die Schaltereinrichtung in Zusammenwirkung mit dem Batterieschalter kann sicherstellen, dass die dem Zwischenkreis zugeführte Leistung nicht in die Antriebsbatterieeinheit abfließt, sondern als Antriebsleistung nutzbar ist.

In einer Ausführungsform ist die Stellgröße eine Antriebsleistung des elektrischen Antriebs, wobei die Antriebsschnittstelle dazu konfiguriert ist, dem elektrischen Antrieb die Antriebsleistung vorzugeben, sodass über die Antriebsleistung die Zwischenkreisspannung einstellbar ist. So kann über die Vorgabe der Antriebsleistung die Zwischenkreisspannung an den Sollwert angepasst werden. So sinkt insbesondere die Zwischenkreisspannung, wenn die Antriebsleistung höher ist als die Generatorleistung und es steigt die Zwischenkreisspannung, wenn die Antriebsleistung geringer ist als die Generatorleistung. Die Antriebsleistung eignet sich als Stellgröße, da sie sich verzögerungsfrei einstellen umsetzen lässt. Dies trägt zu einer robusten Regelung bei.

In einer Ausführungsform ist die Generatorschnittstelle dazu konfiguriert, den Generator erst dann zu aktivieren, wenn die Zwischenkreisspannung einen ersten Schwellwert erreicht hat. Insbesondere kann hierbei das Regelungsmodul dazu konfiguriert sein, die Steuergröße erst dann auszugeben, wenn die Zwischenkreisspannung einen ersten Schwellwert erreicht hat. Sobald der Generator aktiviert ist, kann insbesondere nicht nur dessen Leistung erfasst werden, sondern auch dessen Leistung erhöht werden, beispielsweise indem ein Tretwiderstand des Generators aktiviert und/oder erhöht wird. Im Falle des Lastenfahrrads ist dadurch eine Tretbewegung der Nutzerin erschwert. So kann in dem batterielosen Zustand sichergestellt werden, dass die Steuereinheit zunächst mit ausreichend Leistung versorgt worden ist, bevor sie mit dem Auswertemodul kommuniziert. Dies erhöht weiter die Robustheit der Regelung, weil auf fluktuierende Leistungseinträge reagiert werden kann. Der erste Schwellwert kann variabel festgelegt werden. Beispielsweise handelt es sich um eine Schwellwertspannung, die größer als 10 V und kleiner als 80 V ist, insbesondere zwischen 20 V und 30 V liegt. Sofern es sich um ein kettenloses Lastenfahrrad handelt, kann der erste Schwellwert beispielsweise überschritten werden, wenn die Tretkurbel mit einem entsprechenden Drehmoment um eine Viertelumdrehung rotiert wurde.

In einer Ausführungsform ist die Antriebsschnittstelle dazu konfiguriert ist, dem elektrischen Antrieb die Stellgröße erst dann auszugeben, wenn die Zwischenkreisspannung einen zweiten Schwellwert überschritten hat. So kann im batterielosen Zustand sichergestellt werden, dass die Steuereinheit zunächst mit ausreichend Leistung versorgt worden ist, bevor sie mit dem elektrischen Antrieb kommuniziert. Dies erhöht weiter die Robustheit der Regelung, weil auf fluktuierende Leistungseinträge reagiert werden kann. Dem elektrischen Antrieb wird auf diese Weise erst dann eine Leistung zugeführt, wenn in dem Zwischenkreis bereits eine ausreichend hohe Spannung anliegt. Beispielsweise handelt es sich um eine Schwellwertspannung, die beispielsweise größer als 40 V und kleiner als 100 V, insbesondere zwischen 50 V und 70 V ist. Die zweite Schwellwertspannung kann dem Sollwert der Zwischenkreisspannung entsprechen oder leicht unterhalb dessen liegen, beispielsweise 5% unterhalb des Sollwertes. Vor dem Überschreiten des zweiten Schwellwertes kann der Tretwiderstand des Generators stetig und differenzierbar erhöht werden, sodass beispielsweise für eine Tretbewegung mehr Kraft aufzuwenden ist.

In einer Ausführungsform bestimmt das Auswertemodul die Stellgröße mittels eines Faktors, mit dem der Generatorparameter zu verrechnen, insbesondere zu multiplizieren ist, um die Antriebsleistung als Stellgröße zu erhalten. Der Generatorparameter ist insbesondere zeitlich stark fluktuierend, weil er proportional zu der zugeführten Tretleistung sein kann. Über eine Verbindung der Stellgröße, insbesondere der Antriebsleistung, mit dem Generatorparameter, insbesondere Generatorleistung, kann eine Kopplung der Leistungszufuhr mit der Leistungsentnahme erreicht werden. Dies ist einer zuverlässigen Regelung zuträglich. Das Auswertemodul kann insofern als Stelleinrichtung auf der Regelstrecke fungieren, die aus der von einem Regler ausgegebenen Steuergröße eine Stellgröße vorgibt, anhand derer das Fahrzeug geregelt wird.

In einer Ausführungsform variiert der Faktor in Abhängigkeit des Generatorparameters und insbesondere in einem Bereich zwischen 0,5 und 1,5, insbesondere 0,8 und 1,2, liegt. Wenn der Faktor bei 0, 5 liegt, wird die Hälfte der Generatorleistung als Motorleistung vorgegeben. Liegt er hingegen bei 1, 5, wird das 1,5- fache der Generatorleistung als Motorleistung vorgegeben. Beispielsweise aufgrund auftretende Reibungsverluste kann der Faktor üblicherweise kleiner als 1 sein und nur in Ausnahmesituationen auf einen Wert oberhalb von 1 bestimmt werden. Die Fluktuationen des Faktors und die damit verbundenen Fluktuationen der Korrelation zwischen Generatorleistung und Antriebsleistung werden von Kapazitäten innerhalb des Zwischenkreises ermöglicht.

In einer Ausführungsform ist die Steuereinheit dazu konfiguriert, bei einer Verringerung des Generatorparameters die Antriebsleistung des Antriebs zu verringern, um die Zwischenkreisspannung zu erhöhen und/oder bei einer Erhöhung des Generatorparameters die Antriebsleistung des Antriebs zu erhöhen, um die Zwischenkreisspannung zu verringern.

In einer Ausführungsform hängt der Generatorparameter, insbesondere ausschließlich, von einer fluktuierenden Tretleistung, insbesondere proportional, ab, die eine Nutzerin dem Fahrzeug zuführt.

Der Generatorparameter kann proportional zur Tretleistung sein. Im Falle eines Lastenfahrrads hängt die Leistung des Generators davon ab, wie stark eine Nutzerin in die Pedale tritt. Üblicherweise liegt der Generatorparameter abhängig von der Nutzerleistung in einem Bereich zwischen 20 W und 200 W.

In einer Ausführungsform ist der Sollwert der Zwischenkreisspannung voreinstellbar und der Istwert der Zwischenkreisspannung weicht um weniger als 15%, insbesondere weniger als 10%, von dem Sollwert der Zwischenkreisspannung ab, wobei die Abweichung von einer Taktung der Steuereinheit abhängt. Der Sollwert der Zwischenkreisspannung kann der Steuereinheit über eine Kommunikationsschnittstelle mitgeteilt werden, er ist insofern voreinstellbar. Der Sollwert der Zwischenkreisspannung kann mit einem Betriebszustand, in dem sich das Fahrzeug, insbesondere das kettenlose Lastenfahrrad befindet, variieren. Beispielsweise kann er bei einer Bergabfahrt höher sein als bei einer Bergauffahrt. Alternativ kann der Sollwert der Zwischenkreisspannung zustandsunabhängig konstant sein. Die Steuereinheit kann eine solche Taktung haben, dass die Antriebsleistung als Stellgröße stets so angepasst wird, dass der Istwert der Zwischenkreisspannung nicht mehr als 15 % von dem Sollwerte Zwischenkreisspannung abweicht. Je höher die Taktung, desto geringer die Abweichung und desto höher der Leistungsverbraucht. Dies stellt einen effizienten Kompromiss aus Leistungsverbrauch der Steuereinheit und Regelungseffizienz der Regelstrecke dar.

In einer Ausführungsform ist eine Generatoreinheit zur Einbindung in einen Zwischenkreis vorgesehen. Die Generatoreinheit beinhaltet eine offenbarungsgemäße Steuereinheit und einen offenbarungsgemäß Generator, der insbesondere in eine Tretkurbel eines Lastenfahrrads oder in eine Handkurbel, etwa bei Rollstuhlfahrzeugen, integrierbar ist. Der Generator kann ferner in eine Lineareinheit, die anstelle einer kreisförmigen Antriebsbewegung eine lineare Antriebsbewegung erfährt, integrierbar sein. Die Generatoreinheit kann als eigenständiges Bauteil ausgestaltet sein.

In einer Ausführungsform ist ein Fahrzeug vorgesehen, das eine offenbarungsgemäße Generatoreinheit, eine Motoreinheit und einen offenbarungsgemäßen Zwischenkreis beinhaltet. Die Motoreinheit umfasst den elektrischen Antrieb und eine Antriebssteuereinheit zur Anpassung einer Antriebsleistung des elektrischen Antriebs. Bei dem Fahrzeug sind der elektrische Antrieb und der Generator rein elektrisch miteinander gekoppelt. Sie sind insofern kettenfrei, also ohne mechanische Kraftübertragung von dem Generator zu dem Antrieb.

In einer Ausführungsform hat das Fahrzeug eine Antriebsbatterieeinheit, die dem Zwischenkreis wahlweise zuschaltbar ist, wobei insbesondere ein Zustandsdetektor erkennt, ob die Antriebsbatterieeinheit aktiv an den Zwischenkreis angeschlossen ist. Hierbei handelt es sich um denselben Zustandsdetektor wie den in einer Ausführungsform der Steuereinheit. Sofern der Zustandsdetektor erkennt, dass die Antriebsbatterieeinheit aktiv an den Zwischenkreis angeschlossen ist, der Zwischenkreis also Batterie betrieben ist, arbeitet die Steuereinheit in einer ersten Konfiguration. Erkennt der Zustandsdetektor, dass die Antriebsbatterieeinheit nicht aktiv an den Zwischenkreis angeschlossen ist, der Zwischenkreis mithin batterielos ist, kann die Steuereinheit in einer zweiten Konfiguration arbeiten. Insbesondere in der zweiten Konfiguration ist die Steuereinheit dazu konfiguriert, die Zwischenkreisspannung als Regelgröße heranzuziehen. Die offenbarungsgemäße Regelung durch das Regelungsmodul und das Auswertemodul der Steuereinheit wird insbesondere nur dann herangezogen, wenn die Antriebsbatterieeinheit nicht aktiv an den Zwischenkreis angeschlossen ist, dieser also batterielos ist. So wird eine effiziente Steuerung und Regelung in sowohl der batteriebetriebenen Konfiguration als auch der batterielosen Konfiguration erreicht.

In einer Ausführungsform ist das Fahrzeug ein kettenloses Lastenfahrrad, das eine Tretkurbel und eine Baugruppe, insbesondere eine Hinterradbaugruppe, hat, wobei der Generator in die Tretkurbel und der elektrische Antrieb in die Hinterradbaugruppe integriert ist. Die Hinterradbaugruppe kann eine Hinterradnabe und eine Hinterradachse aufweisen. Es ist auch denkbar, den elektrischen Antrieb in andere Baugruppen, insbesondere in anderen Achsen, wie bspw. eine Vorderradachse, zu integrieren.

Es wird ferner ein Verfahren zum Anpassen einer Antriebsleistung eines elektrischen Antriebs eines Fahrzeugs, insbesondere eines kettenlosen Lastenfahrrads, an eine Ausgangsleistung eines Generators des Fahrzeugs vorgeschlagen. Dieses hat die folgenden Schritte: Den Schritt des Erfassens eines Istwerts einer Zwischenkreisspannung, die in einem Zwischenkreis anliegt, der den Generator und den elektrischen Antrieb elektrisch verbindet. Die Zwischenkreisspannung kann über ein Spannungsmessgerät ermittelt werden. Sie kann auch über ein Strommessgerät und nachfolgende Umrechnung ermittelt werden. Das Messgerät kann beispielsweise in die Steuereinheit integriert sein. Das Verfahren hat ferner den Schritt des Erfassens eines Generatorparameters, insbesondere einer Generatorleistung, die insbesondere von einer fluktuierenden Tretleistung abhängt, insbesondere proportional dazu ist, die eine Nutzerin dem Fahrzeug zuführt. Die Generatorleistung kann von dem Generator erfasst werden und der Steuereinheit über die Generatorschnittstelle mitgeteilt werden. Das Verfahren hat ferner den Schritt des Erfassens eines Sollwerts der Zwischenkreisspannung, der insbesondere voreinstellbar ist. Der Sollwert der Zwischenkreisspannung kann im Wesentlichen konstant sein oder abhängig von einem Zustand, in dem ich das Fahrzeug befindet, variieren. Das Verfahren hat ferner den Schritt des Erfassens einer Regelabweichung zwischen dem Istwert der Zwischenkreisspannung und dem Sollwert der Zwischenkreisspannung. Das Verfahren hat ferner den Schritt des Anpassens der Antriebsleistung des elektrischen Antriebs in Abhängigkeit der Regelabweichung. So kann die erfasste Spannungsdifferenz als Regelabweichung herangezogen werden, um die Antriebsleistung anzupassen. Dieses Verfahren lässt sich beispielsweise von einer offenbarungsgemäßen Steuereinheit realisieren. Es entfaltet insofern dieselben Vorteile und hat dieselben Effekte wie die offenbarungsgemäße Steuereinheit.

In einer Ausführungsform laufen nach dem Erfassen der Regelabweichung und vor dem Anpassen der Antriebsleistung folgende Schritte ab: Der Schritt des Bestimmens eines Faktors, anhand dessen sich aus der Generatorleistung eine Antriebsleistung ergibt, insbesondere indem die Generatorleistung mit dem Faktor multipliziert wird, und Bestimmen der Antriebsleistung. Bei dem Faktor kann es sich um den vorstehend im Zusammenhang mit der Steuereinheit beschriebenen Faktor handeln. Auf die entsprechende Offenbarung sei verwiesen. Es läuft ferner der Schritt des Übermittelns der Antriebsleistung an eine Antriebssteuereinheit ab. Es läuft ferner der Schritt des Anpassens der Antriebsleistung des elektrischen Antriebs an die übermittelte Antriebsleistung ab, um den Istwert der Zwischenkreisspannung an den Sollwert der Zwischenkreisspannung anzupassen.

In einer Ausführungsform werden die Verfahrensschritte kontinuierlich durchgeführt um bei der fluktuierenden Generatorleistung die Antriebsleistung variabel derart zu bestimmen, dass der im Wesentlichen konstante Sollwert der Zwischenkreisspannung kontinuierlich geregelt wird. Es kann beispielsweise eine Taktung vorgegeben werden, mit der die einzelnen Komponenten, die für das Erfassen des Istwerts der Zwischenkreisspannung, für das Erfassen der Generatorleistung, für das Erfassen des Sollwerts der Zwischenkreisspannung und für das Erfassen der Regelabweichung zuständig sind, die jeweiligen Werte erfassen. Die Taktung ist dergestalt, dass die Schritte kontinuierlich ablaufen. Sie kann insbesondere so bemessen sein, dass der Istwert um weniger als 15%, insbesondere weniger als 10%, von dem Sollwert der Zwischenkreisspannung abweicht.

In einer Ausführungsform wird das Erfassen der Generatorleistung erst dann durchgeführt, wenn die Zwischenkreisspannung einen ersten Schwellwert überschritten hat. Bei diesem ersten Schwellwert kann es sich um den im Zusammenhang mit der Steuereinheit offenbarten ersten Schwellwert handeln. Auf die entsprechende Offenbarung sei verwiesen.

In einer Ausführungsform wird das Anpassen der Antriebsleistung nach erst dann durchgeführt, wenn die Zwischenkreisspannung einen zweiten Schwellwert überschritten hat. Bei diesem zweiten Schwellwert kann es sich um den im Zusammenhang mit der Steuereinheit offenbarten zweiten Schwellwert handeln. Auf die entsprechende Offenbarung sei verwiesen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische Ansicht eines Lastenfahrrads;
- Figur 2: eine schematische Ansicht verschiedener Komponenten zum Antrieb eines Fahrzeugs;
- Figur 3: ein schematisches Schaltbild eines Zwischenkreises;
- Figur 4: ein Blockschaltbild einer Regelstrecke;
- Figur 5: ein Ablaufdiagramm verschiedener Zustände;
- Figur 6: das Verhalten verschiedener Komponenten bei verschiedenen Zuständen; und
- Figur 7: verschiedene Zustände im Drehmoment-Drehzahl-Diagramm.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird zur Vermeidung von Redundanzen teilweise verzichtet.

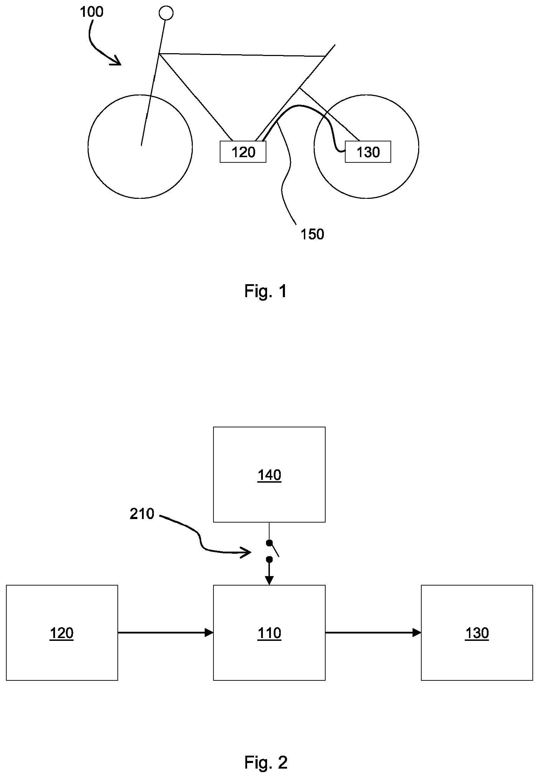

Figur 1 zeigt schematisch ein Lastenfahrrad 100. Das Lastenfahrrad 100 ist dazu ausgelegt, Lasten zu transportieren. Im Bereich einer Tretkurbel ist ein Generator 120 angebracht. Über den Generator 120 lässt sich die von einer Nutzerin über die Tretkurbel mechanisch eingebrachte Leistung in elektrischen Strom wandeln. Der elektrische Strom wird einem elektrischen Antrieb 130 über ein elektrisches Kabel 150 zugeführt. Die von der Nutzerin eingebrachte mechanische Leistung wird somit - unter Abzug unabdingbare Verluste - vollständig in elektrischen Strom gewandelt, sodass das Lastenfahrrad 100 kettenfrei ist. Der Generator 120 und der elektrische Antrieb 130 sind rein elektrisch miteinander gekoppelt.

Figur 2 zeigt schematisch die bei der elektrischen Kopplung zwischen dem Generator 120 und dem elektrischen Antrieb 130 beteiligten Komponenten. Zwischen dem Generator 120 und dem elektrischen Antrieb 130 ist ein Zwischenkreis 110 als Stromkreis zur elektrischen Verbindung des Generators 120 mit dem elektrischen Antrieb 130 vorgesehen. An den Zwischenkreis 110 kann eine Antriebsbatterieeinheit 140 angeschlossen sein. Ein Zustandsdetektor erkennt, ob die Antriebsbatterieeinheit 140 aktiv an den Zwischenkreis 110 angeschlossen ist oder nicht. In Figur 2 ist zwischen der Antriebsbatterieeinheit 140 und dem Zwischenkreis 110 schematisch ein Batterieschalter 210 dargestellt. Der Batterieschalter 210 kann mit einer Schaltereinrichtung kommunizieren und geöffnet werden, wenn der Zustandsdetektor erkannt hat, dass die Antriebsbatterieeinheit 140 nicht aktiv an den Zwischenkreis 110 angeschlossen ist. Die Antriebsbatterieeinheit 140 ist insbesondere dann nicht aktiv an den Zwischenkreis 110 angeschlossen, wenn sie entleert, defekt oder entnommen ist. Ist der Batterieschalter 210 also geöffnet, ist die Antriebsbatterieeinheit 140 nicht aktiv an den Zwischenkreis 110 angeschlossen, ist er geschlossen, ist die Antriebsbatterieeinheit 140 aktiv an den Zwischenkreis 110 angeschlossen. Wenn beispielsweise die Antriebsbatterieeinheit 140 entleert, defekt oder entnommen ist, erkennt der Zustandsdetektor, dass die Antriebsbatterieeinheit 140 nicht aktiv an den Zwischenkreis 110 angeschlossen ist und öffnet in der Folge den Batterieschalter 210. So kann sichergestellt werden, dass eine dem Zwischenkreis 110 von dem Generator 120 zugeführte Leistung unter Berücksichtigung von unvermeidbaren Verlusten vollständig dem elektrischen Antrieb zur Verfügung gestellt wird und die zugeführte Leistung nicht in die Antriebsbatterieeinheit 140 fließt.

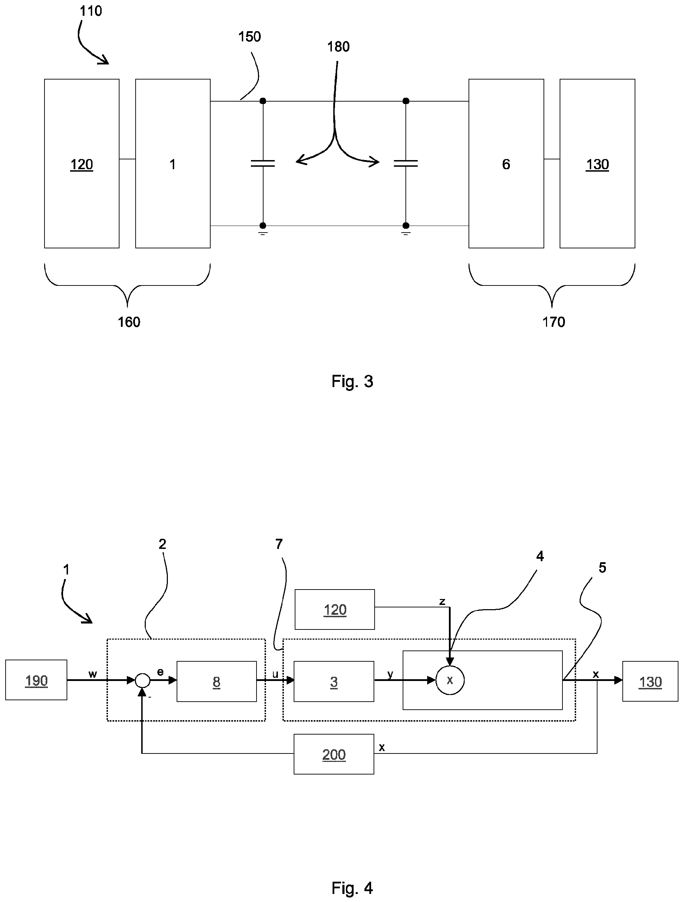

Figur 3 zeigt den Zwischenkreis 110 schematisch. Mit dem Generator 120 ist eine Steuereinheit 1 verbunden. Zusammen bilden der Generator 120 und die Steuereinheit 1 eine Generatoreinheit 160. Die Generatoreinheit 160 kann integral als eigenständiges Bauteil ausgestaltet sein. Mit dem elektrischen Antrieb 130 ist eine Antriebssteuereinheit 6 verbunden. Zusammen bilden der elektrische Antrieb 130 und die Antriebssteuereinheit 6 eine Motoreinheit 170, die ebenfalls integral als eigenständiges Bauteil ausgestaltet sein kann. Der Generator 120 und der elektrische Antrieb 130 sind über den Zwischenkreis 110 miteinander verbunden. Der Zwischenkreis 110 weist neben der Steuereinheit 1 und der Antriebssteuereinheit 6 eine Zwischenkreiskapazität auf, die beispielsweise über parallel geschaltete Kondensatoren 180 realisiert ist. Die Zwischenkreiskapazität kann beispielsweise in die Steuereinheit 1 und/oder die Antriebssteuereinheit 6 integriert sein, sodass sie Teil der Generatoreinheit 160 und/oder der Motoreinheit 170 ist. Dem Generator 120 kann ein AC/DC-Wandler nachgelagert sein, dem elektrischen Antrieb 130 kann ein DC/AC-Wandler vorgelagert sein, sodass der Generator 120 einen Wechselstrom produziert, der für den Zwischenkreis 110 in einen Gleichstrom gewandelt wird, der für den elektrischen Antrieb 130 wiederum in einen Wechselstrom gewandelt wird. Die Generatoreinheit 160 kann in die Tretkurbel des Lastenfahrrads 100 integriert sein. Es kann auch nur der Generator 120 in die Tretkurbel integriert sein und die Steuereinheit 1 an einem anderen Ort untergebracht sein. Die Motoreinheit 170 kann in eine Hinterradnabe des Lastenfahrrads 100 integriert sein. Es kann auch nur der elektrische Antrieb 130 in die Hinterradnabe integriert sein und die Antriebssteuereinheit 6 an einem anderen Ort untergebracht sein. Die Generatoreinheit 160 und die Motoreinheit 170 sind über elektrische Kabel 150 miteinander verbunden. Eine über das elektrische Kabel 150 hinausgehende mechanische Verbindung ist nicht vorgesehen.

Figur 4 ist ein Blockschaltbild eines Regelkreises des Zwischenkreises 110, der über eine Steuereinheit 1 geregelt wird. Die von der Steuereinheit 1 realisierten Funktionen können in einer Ausführungsform zumindest teilweise von der Antriebssteuereinheit 6 übernommen werden. Über ein Eingangsmodul 190 wird dem Regelkreis ein Sollwert der Zwischenkreisspannung Uz als Führungsgröße w vorgegeben. Dieser Sollwert kann zwischen 40 und 100 V, insbesondere bei 50 V liegen. In einer Ausführungsform ist das Eingangsmodul 190 ansteuerbar, sodass der Sollwert der Zwischenkreisspannung Uz einstellbar ist. Der Sollwert der Zwischenkreisspannung Uz kann konstant sein. Er kann auch um einen konstanten Wert schwankend einstellbar sein, sodass der Sollwert äußere Einflussfaktoren, wie eine Störgröße z, berücksichtigt. Einem Regelungsmodul 2 wird neben dem Sollwert der Zwischenkreisspannung Uz als Führungsgröße w ein Istwert der Zwischenkreisspannung Uz als Regelgröße x zugeführt. Die Regelgröße x wird durch ein Messmodul 200 der Steuereinheit 1 erfasst. Das Regelungsmodul 2 stellt zunächst eine Regelabweichung e zwischen dem Sollwert der Zwischenkreisspannung Uz und dem Istwert der Zwischenkreisspannung Uz, etwa mittels eines Summenbilders, fest. Aus dieser Regelabweichung e bestimmt das Regelungsmodul einen Fehler, insbesondere in Form einer Spannungsdifferenz. Aus der Regelabweichung bestimmt ein Regler 8, der beispielsweise als PID-Regler oder PI-Regler ausgestaltet ist, eine Steuergröße u. An das Regelungsmodul 2 schließt sich eine Regelstrecke 7 an, der die Steuergröße u zugeführt wird. Die Regelstrecke 7 wirkt über das Verhältnis der elektrischen Leistungen des Generators 120 und des elektrischen Antriebs 130 mittelbar oder unmittelbar auf die Zwischenkreisspannung Uz als Regelungsgröße x ein. Die Regelabweichung kann durch das Auftreten von Störgrößen z in der Regelstrecke 7, beispielsweise durch die variierende Zufuhr von Generatorleistung und zusätzlich durch Veränderungen der Umwelt oder des Terrains, in dem sich das Fahrzeug aufhält, oder durch eine Veränderung des Soll-Werts der Zwischenkreisspannung, also der Führungsgröße, beeinflusst werden.

Ein Auswertemodul 3 als Stelleinrichtung empfängt die Steuergröße u und bestimmt daraus eine Stellgröße y. Die Stellgröße y ist eine Antriebsleistung des elektrischen Antriebs 130. Wird die Antriebsleistung des elektrischen Antriebs 130 erhöht, sinkt die Zwischenkreisspannung, wird die Antriebsleistung des elektrischen Antriebs 130 verringert, steigt die Zwischenkreisspannung. Die Steuereinheit 1 weist eine Generatorschnittstelle 4 auf, über die die Steuereinheit 1 und der Generator 120 miteinander kommunizieren können, sodass der Steuereinheit 1 ein Generatorparameter, insbesondere ein Wert der Generatorleistung, mitgeteilt wird. Zudem weist die Steuereinheit 1 eine Antriebsschnittstelle 5 auf, über die die Steuereinheit 1 und der elektrische Antrieb 130 miteinander kommunizieren können, sodass die Steuereinheit 1 und der elektrische Antrieb 130 Signale bezüglich der Antriebsleistung des elektrischen Antriebs 130 austauschen.

Gehen wir von dem Fall aus, dass das Fahrzeug ein kettenloses Lastenfahrrad 100 mit einem elektrischem Antrieb 130 ist: Der elektrische Antrieb 130 und somit das kettenlose Lastenfahrrad 100 wird in einem batteriebesetzten Zustand, also einem Zustand, in dem die Antriebsbatterieeinheit 140 aktiv an den Zwischenkreis 110 angeschlossen ist, mittels der Antriebsbatterieeinheit 140 angetrieben. Zusätzlich kann der elektrische Antrieb 130 von dem Generator 120, der die Leistung einer Nutzerin in elektrische Leistung wandelt, unterstützt werden. Zwischen dem Generator 120, dem elektrischen Antrieb 130 und der Antriebsbatterieeinheit 140 ist der Zwischenkreis 110 vorgesehen. In dem batteriebesetzten Zustand wird der Zwischenkreis 110 also von der Antriebsbatterieeinheit 140 und dem Generator 120 mit Leistung versorgt. Die Leistung, die dabei die Antriebsbatterieeinheit 140 zur Verfügung stellt, ist um ein Vielfaches höher als die Leistung, die der Generator 120 zur Verfügung stellt. In dem batteriebesetzten Zustand kommt daher der größte Teil der Antriebsleistung aus der Antriebsbatterieeinheit 140. Wenn wir beispielsweise von der Spannung als leistungsindizierendem Parameter ausgehen, so werden beispielsweise 90 % der von dem elektrischen Antrieb 130 benötigten Spannung von der Antriebsbatterieeinheit 140 bereitgestellt und 10 % von dem Generator 120.

Dem steht ein batterieloser Zustand gegenüber, also ein Zustand, in dem die Antriebsbatterieeinheit 140 nicht aktiv an dem Zwischenkreis 110 angeschlossen ist und die Antriebsbatterieeinheit 140 dem Zwischenkreis 110 keine Antriebsleistung zur Verfügung stellt. Würde in dem batterielosen Zustand dieselbe Konfiguration der Steuereinheit 1 vorherrschen wie in dem batteriebesetzten Zustand, bräche der Zwischenkreis 110 unmittelbar zusammen. Denn der elektrische Antrieb 130 würde um ein Vielfaches mehr Leistung erwarten als die dann ausschließlich von dem Generator 120 bereitgestellte Leistung. Die offenbarungsgemäße Steuereinheit 1 hat neben der Konfiguration für den batteriebesetzten Zustand daher eine Konfiguration für den batterielosen Zustand. Ob der batteriebesetzten oder der batterielose Zustand vorliegen, kann über einen Zustandsdetektor erfasst werden. Im batterielosen Zustand lässt sich das kettenlose Lastenfahrrad 100 wie folgt betreiben:

Eine Nutzerin führt dem Generator 120 beispielsweise eine erhöhte Leistung zu. Diese wird in elektrischen Strom gewandelt und dem Zwischenkreis 110 zugeführt. Die Generatorschnittstelle 4 der Steuereinheit 1 empfängt von dem Generator 120 den Wert der Generatorleistung. In dem Zwischenkreis 110 liegt nach einer entsprechenden Aktivierung, nämlich einer Schwellwertüberschreitung, wie nachstehend beschrieben wird, zunächst im Wesentlichen der Sollwert der Zwischenkreisspannung an. Durch die von dem Generator zugeführte erhöhte Leistung steigt die Zwischenkreisspannung an. Der entsprechende Istwert der Zwischenkreisspannung wird von dem Messmodul 200 detektiert und dem Regelungsmodul 2 zugeführt. Das Regelungsmodul 2 stellt eine Regelabweichung zwischen dem Istwert der Zwischenkreisspannung und dem Sollwert der Zwischenkreisspannung fest. Im vorliegenden Beispiel hat sich aufgrund der erhöhten Leistungszuführung durch die Nutzerin die Zwischenkreisspannung erhöht. Damit sich die Zwischenkreisspannung wieder dem Sollwert annähert, berechnet das Auswertemodul 3 einen Wert, um den die Antriebsleistung des elektrischen Antriebs 130 ansteigen sollte, damit die Zwischenkreisspannung wieder sinkt. Diesen Wert teilt die Steuereinheit 1 über die Antriebsschnittstelle 5 dem elektrischen Antrieb 130 mit. Dieser erhöht entsprechend seine Leistung, was zu einem Abfallen der Zwischenkreisspannung führt. So lässt sich ein kettenloses Lastenfahrrad 100 auch dann betreiben, wenn keine Antriebsbatterieeinheit 140 aktiv ist, beispielsweise, weil sie abgenommen, defekt oder entleert ist. So kann die Leistung, die dem Zwischenkreis 110 über den Generator 120 zugeführt wird, im Verhältnis von im Wesentlichen 1 zu 1 aus dem Zwischenkreis 110 über den elektrischen Antrieb 130 entnommen werden, indem die Zwischenkreisspannung als Regelgröße im Wesentlichen konstant gehalten wird. Wenn ein Abgleich des Istwerts mit dem Sollwert ergibt, dass die Zwischenkreisspannung zu hoch ist, passiert Folgendes: um die Zwischenkreisspannung zu senken, wird der Antriebssteuereinheit 6 mitgeteilt, dass der der elektrische Antrieb 130 mehr Leistung, mithin der Strom, verbrauchen soll. So wird dem Zwischenkreis 110 mehr Leistung entnommen, als ihm zugeführt wird. Der Faktor liegt somit über 1. Dies lässt sich beispielsweise über die Kondensatoren 180 im Zwischenkreis 110 als Zwischenkreiskapazität realisieren, denen Spannung entnommen wird. Wenn der Abgleich ergibt, dass die Zwischenkreisspannung zu niedrig ist, passiert indes Folgendes: um die Zwischenkreisspannung zu erhöhen, wird der Antriebssteuereinheit 6 mitgeteilt, dass der elektrische Antrieb 130 weniger Leistung, mithin weniger Strom, verbrauchen soll. Der Faktor liegt somit unter 1. Dies lässt sich beispielsweise ebenfalls über Kondensatoren im Zwischenkreis als Zwischenkreiskapazität realisieren, die mit Spannung aufgeladen werden.

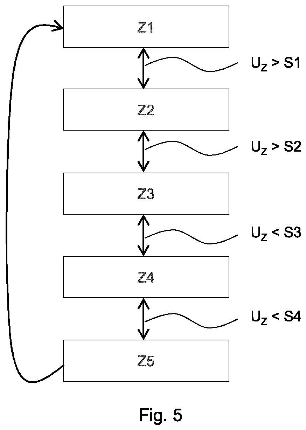

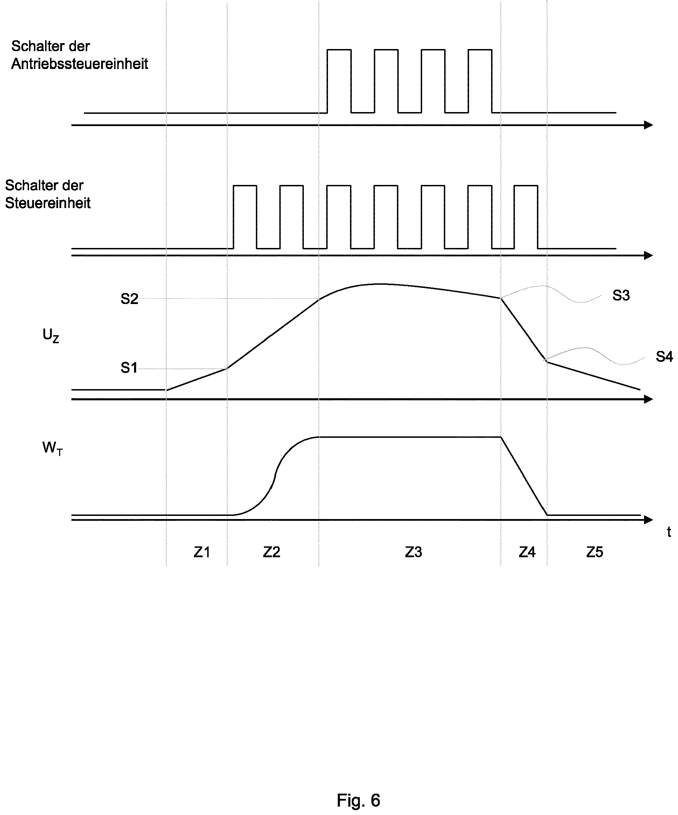

Die Figuren 5 und 6 zeigen verschiedene Zustände, die der Zwischenkreis 110 im batterielosen Zustand einnehmen kann. Figur 5 stellt eine von der Steuereinheit 1 implementierte Zustandsmaschine, mithin einzelne Zustände sowie deren Übergänge anhand von Schwellwertüberschreitungen, dar. Die Zustandsmaschine definiert verschiedene Zustände, in denen sich der Zwischenkreis 110 befinden kann. Für jeden Zustand gibt es bestimmte Aktionen, die möglich sind (bspw. von einem Zustand Z1 in einen Zustand Z2), und bestimmte Aktionen, die nicht möglich sind (bspw. von dem Zustand Z1 direkt in einen Zustand Z3). Die Zustandsmaschine gibt auch vor, wie man von einem in den nächsten Zustand kommt und welche Bedingungen in welcher Reihenfolge erreicht sein müssen. Figur 6 zeigt in der ersten Zeile, ob die Antriebssteuereinheit 6 aktiv ist und in der zweiten Zeile, ob die Steuereinheit 1 aktiv ist. Sobald die Steuereinheit 1 oder die Antriebssteuereinheit 6 aktiv sind, werden entsprechende Schalter hochfrequent, d. h. bis zu 40 kHz, zu- und abgeschaltet. In der dritten Zeile zeigt Figur 6 einen Spannungsverlauf der Zwischenkreisspannung Uz, in der vierten zeigt sie einen Tretwiderstand W_{T} in Form eines Drehmoments, den eine Nutzerin in den verschiedenen Zuständen erfährt.

Im Zustand Z1 ist das Fahrzeug, insbesondere das kettenlose Lastenfahrrad 100, unbewegt und die Steuereinheit 1 ist inaktiv. Eine Nutzerin führt dem Generator 120 im Zustand Z1 Leistung zu, etwa indem sie die Pedale des Lastenfahrrads 100 mittels einer Tretbewegung bewegt. Die Leistungszufuhr führt zu einem leichten Anstieg der Zwischenkreisspannung Uz, dargestellt in der dritten Zeile von Figur 6. Dem Generator 120 ist noch kein Tretwiderstand W_{T} auferlegt, sodass die Nutzerin beim Treten nur einen minimalen mechanischen Widerstand, beispielsweise aufgrund einer Lagerreibung, erfährt. Sobald dem Zwischenkreis 110 ausreichend Energie zugeführt wurde, also ein erster Schwellwert S1 erreicht ist, wechselt die Steuereinheit 1 vom inaktiven Zustand in den aktiven Zustand, wie in der zweiten Zeile von Figur 6 dargestellt. Der erste Schwellwert S1 kann eine erste Schwellwertspannung sein, die beispielsweise nach einer Viertelumdrehung der Pedale erreicht ist. Die erste Schwellwertspannung kann beispielsweise größer als 10 V und kleiner als 80 V, insbesondere zwischen 20 V und 30 V sein. Die erste Schwellwertspannung liegt beispielsweise unterhalb des Sollwertes der Zwischenkreisspannung. Sodann ist der Zustand Z2 erreicht, wie von der Zustandsmaschine in Figur 5 vorgegeben.

Im Zustand Z2 ist das Fahrzeug unbewegt und die Steuereinheit 1 ist aktiv. Die Steuereinheit 1 ist somit in der Lage, über die Generatorschnittstelle 4 mit dem Generator 120 beispielsweise bidirektional Signale auszutauschen. Führt die Nutzerin dem Generator 120 im Zustand Z2 weiterhin Leistung zu, steigt die Zwischenkreisspannung Uz weiter an. Im Zustand Z2 kann der Tretwiderstand W_{T} des Generators 120 stetig und differenzierbar erhöht werden, sodass beispielsweise für eine Tretbewegung mehr Kraft aufzuwenden ist, wie in der dritten Zeile von Figur 6 dargestellt. Damit löst das offenbarungsgemäße System folgendes Problem: Würde der Tretwiderstand W_{T} nicht erhöht werden, würde er in dem Moment, in dem die Steuereinheit 1 in den Zustand S3 übergeht (siehe nachfolgende Beschreibung) und somit eine Leistung von dem Zwischenkreis 110 an den elektrischen Antrieb 130 weitergegeben wird, sprunghaft ansteigen. Der sprunghafte Anstieg würde zu einem sprunghaft erhöhten Tretwiderstand führen, womit die Nutzerin nicht rechnen würde und eventuell aufhören würde zu treten. Dies würde wiederum zu einem Spannungsabfall führen, wodurch das System wieder im Ausgangszustand Z1 stünde. Durch das Erhöhen des Tretwiderstands W_{T} wird somit eine robuste Steuerung gewährleistet. Der Tretwiderstand W_{T} wird erhöht, indem die Spulen des Generators 120 elektrisch so angesteuert werden, dass sich der Strom in den Spulen erhöht und über die Steuereinheit 1 in den Zwischenkreis 110 fließt. Somit dient die Steuereinheit, wenn es sich bei dem Generator 120 um einen Drehstromgenerator handelt, als Gleichrichter.

Im Zustand Z2 bleibt das Fahrzeug weiterhin unbewegt, weil die Antriebssteuereinheit 6 und mit ihr der elektrische Antrieb 130 noch inaktiv sind. Die von der Nutzerin zugeführte Leistung wird stattdessen verwendet, um den Zwischenkreis 110 und die darin angeordneten Komponenten, wie beispielsweise die Kondensatoren 180, die Steuereinheit 1 und die Antriebssteuereinheit 6, auf ein bestimmtes energetisches Niveau zu bringen. Das bestimmte energetische Niveau kann eine zweite Schwellwertspannung als zweiter Schwellwert S2 sein. Die zweite Schwellwertspannung kann beispielsweise größer als 40 V und kleiner als 100 V, insbesondere zwischen 50 V und 70 V sein. Die zweite Schwellwertspannung kann dem Sollwert der Zwischenkreisspannung entsprechen oder leicht unterhalb dessen liegen, beispielsweise 5% unterhalb des Sollwertes. Dadurch, dass die zweite Schwellwertspannung unterhalb des Sollwertes der Zwischenkreisspannung liegt, kann das Fahrzeug schon losfahren, auch wenn sich erst abzeichnet, dass die gewünschte Zwischenkreisspannung bald erreicht ist. Dies erhöht den Fahrkomfort. Sobald die Zwischenkreisspannung Uz den zweiten Schwellwert S2 überschreitet, beispielsweise nach einer weiteren Viertelumdrehung der Pedale, gibt die Steuereinheit 1 der Antriebssteuereinheit 6 ein Signal, sodass die Antriebssteuereinheit 6 vom inaktiven in den aktiven Zustand wechselt. Sodann ist der Zustand Z3 erreicht.

Im Zustand Z3 ist die Antriebssteuereinheit 6 aktiv, sodass dem elektrischen Antrieb 130 elektrische Leistung zugeführt wird. Führt die Nutzerin dem Generator 120 im Zustand Z3 weiterhin Leistung zu, wird diese Leistung im Gegensatz zum Zustand Z2 nicht mehr für die Erhöhung der Zwischenkreisspannung Uz genutzt, sondern als Antriebsleistung. Der elektrische Antrieb 130 bewegt somit das Fahrzeug aufgrund der Leistung, die dem Zwischenkreis 110 über den Generator 120 zugeführt wird. Die Zwischenkreisspannung Uz bleibt aufgrund der Regelung durch die Steuereinheit 1 im Zustand Z3 im Wesentlichen konstant. Somit wird ermöglicht, dass das Fahrzeug ausschließlich über die vom Generator 120 zugeführte Leistung betrieben wird und der Zwischenkreis 110 trotz der im Verhältnis sehr geringen Zwischenkreisspannung nicht zusammenbricht. Das Fahrzeug ist im Zustand Z3 derart geregelt, dass die fluktuierende Leistung des Generators 120 zu einer entsprechend variierenden Leistung des elektrischen Antriebs 130 gewandelt wird. Im Zustand Z3 ist somit ein antriebsbatteriefreier Antrieb etwa eines kettenlosen Lastenfahrrads 100 ermöglicht. Tritt eine Nutzerin stärker in die Pedale, erzeugt der Generator 120 mehr elektrische Leistung, die wiederum als Antriebsleistung für den elektrischen Antrieb 130 genutzt wird. Tritt eine Nutzerin indes schwächer in die Pedale, erzeugt der Generator 120 wiederum weniger elektrische Leistung, was zu einem Abfall der Antriebsleistung des elektrischen Antriebs 130 führt. Dabei ist es möglich, den Tretwiderstand W_{T} konstant zu halten, beispielsweise im Bereich zwischen 20 und 50 Nm, selbst wenn die Drehzahl der Pedale variiert, beispielsweise zwischen 30 und 80 Umdrehungen pro Minute. Hört eine Nutzerin auf zu treten und fällt die Zwischenkreisspannung unter den zweiten Schwellwert S2, geht das Fahrzeug wieder in den Zustand Z2 über. Dadurch, dass die Zwischenkreisspannung als Regelgröße an der Führungsgröße des Sollwerts der Zwischenkreisspannung konstant gehalten wird, ist bei variierende Eingangsleistung eine Aufrechterhaltung des Zwischenkreises 100 möglich. Solange die Zwischenkreisspannung oberhalb des dritten Schwellwertes S3 liegt, wird das Fahrzeug ausschließlich durch die Leistung, die die Nutzerin dem Generator 120 zuführt, betrieben. Erst sobald die Zwischenkreisspannung unter einen dritten Schwellwert S3 abfällt, etwa weil die Nutzerin dem Generator 120 nicht mehr ausreichend Leistung zuführt, wird die Antriebssteuereinheit 6 deaktiviert, sodass der elektrische Antrieb 130 das Fahrzeug nicht mehr antreibt. Der dritte Schwellwert S3 kann beispielsweise rund 10 % geringer sein als der zweite Schwellwert S2. Alternativ können der dritte Schwellwert S3 und der zweite Schwellwert S2 miteinander übereinstimmen. Sodann ist der Zustand Z4 erreicht.

Im Zustand Z4 ist das Fahrzeug nicht mehr angetrieben, die Antriebssteuereinheit 6 ist inaktiv und die Steuereinheit 1 ist aktiv. Die Nutzerin hat aufgehört, dem Generator 120 Leistung zuführen. Die Zwischenkreisspannung Uz fällt somit weiter ab. Das Fahrzeug rollt aus oder steht bereits, weil die Antriebssteuereinheit 6 inaktiv ist. Sobald die Zwischenkreisspannung Uz weiter unter ein bestimmtes energetisches Niveau, etwa eine vierte Schwellwertspannung als vierter Schwellwert S4, fällt, geht auch die Steuereinheit 1 in den inaktiven Zustand über. Der Zustand Z5 gleicht bezüglich seiner Schalterstellungen dem Zustand Z1. Der vierte Schwellwert S4 kann beispielsweise rund 10 % geringer sein als der erste Schwellwert S1. Alternativ können der vierte Schwellwert 4 und der erste Schwellwert S1 miteinander übereinstimmen. Sodann ist der Zustand Z5 erreicht.

Der Zustand Z5 gleicht bezüglich der Aktivierung der einzelnen Komponenten dem Zustand Z1. Sobald also der erste Schwellwert S1 ausgehend von dem Zustand Z5 bzw. Z1 wieder überschritten wird, geht das System wie vorstehend beschrieben in den Zustand Z2 über.

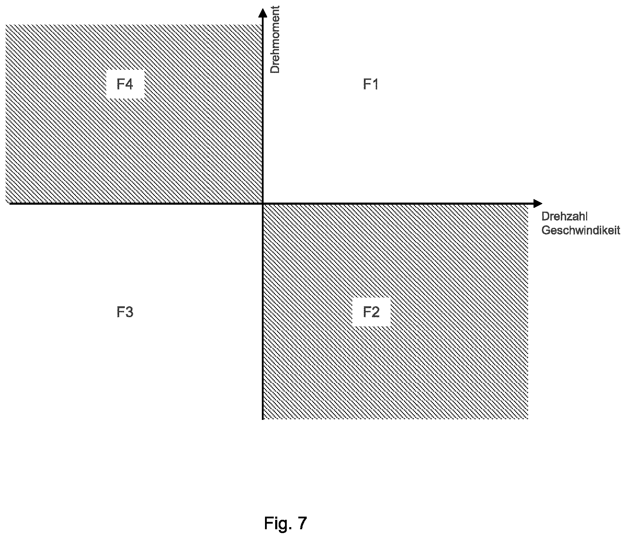

Figur 7 zeigt vier Zustände, von denen die Steuereinheit 1 den elektrischen Antrieb 130 in einzelnen Zuständen abregeln kann. Der Zustandsdetektor, der erkennt, ob die Antriebsbatterieeinheit 140 aktiv an den Zwischenkreis 110 angeschlossen ist, kann in dieser Ausführungsform zusätzlich erkennen, in welchem der Zustände F1 bis F4 das Fahrzeug betrieben wird. In dem Feld F1 beschleunigt das Fahrzeug in eine Vorwärtsbewegung und der elektrische Antrieb 130 wandelt die zugeführte Leistung in eine Rotationsbewegung der Hinterradnabe. In diesem Zustand wird das Fahrzeug vorwärts angetrieben. Dieser übergeordnete Zustand wurde vorstehend beschrieben. In dem Feld F2 bremst das Fahrzeug während einer Vorwärtsbewegung. Die Drehzahl ist daher positiv, das Drehmoment hingegen negativ. Über das negative Drehmoment könnte dem elektrischen Antrieb 130 Leistung entnommen werden und dem Zwischenkreis zugeführt werden, was sich jedoch nachteilhaft auf die Zwischenkreisspannung und auf den Generator auswirken würde. Deshalb sieht die Steuereinheit 1 nach entsprechender Detektion von Feld F2 durch den Zustandsdetektor vor, dass der elektrische Antrieb 130 von dem Zwischenkreis 110 getrennt wird. In diesem Zustand findet somit kein Leistungsaustausch zwischen dem elektrischen Antrieb 130 und dem Zwischenkreis 110 statt. Die aus dem Drehmoment erzeugbare Leistung wird dem Zwischenkreis 110 somit nicht zugeführt. In dem Feld F3 beschleunigt das Fahrzeug in einer Rückwärtsbewegung und der elektrische Antrieb 130 wandelt die zugeführte Leistung wiederum in eine Rotationsbewegung der Hinterradnabe. In diesem Zustand wird das Fahrzeug rückwärts angetrieben. Dieser Zustand gleicht im Wesentlichen dem des Feldes F1. Wenn der Zustandsdetektor diesen Zustand erfasst, sorgt die Steuereinheit 1 dafür, dass der Zwischenkreis 110 und der elektrische Antrieb 130 miteinander verbunden sind. Sollten sie zuvor getrennt gewesen sein, wird diese Trennung im Zustand F3, genauso wie im Zustand F1 wieder aufgehoben. In dem Zustand F4 bremst das Fahrzeug während einer Rückwärtsbewegung. Die Drehzahl ist daher negativ, das Drehmoment hingegen positiv. Dieser Zustand ist aus denselben Gründen wie bei Zustand F2 nachteilhaft. Deshalb sieht die Steuereinheit 1 nach entsprechender Detektion durch den Zustandsdetektor auch in diesem Zustand F4 vor, dass zwischen dem elektrischen Antrieb 130 und dem Zwischenkreis 110 kein Leistungsaustausch stattfindet. Die aus dem Drehmoment erzeugbare Leistung wird dem Zwischenkreis 110 somit nicht zugeführt. Somit wird der elektrische Antrieb 130 nicht zum Bremsen verwendet, weshalb der Generator 120 und die Steuereinheit 1 Bremssignale ignorieren können.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Steuereinheit
- 2: Regelungsmodul
- 3: Auswertemodul
- 4: Generatorschnittstelle
- 5: Antriebsschnittstelle
- 6: Antriebssteuereinheit
- 7: Regelstrecke
- 8: Regler

- 100: Lastenfahrrad
- 110: Zwischenkreis
- 120: Generator
- 130: elektrische Antrieb
- 140: Antriebsbatterieeinheit
- 150: elektrisches Kabel
- 160: Generatoreinheit
- 170: Motoreinheit
- 180: Kondensator
- 190: Eingangsmodul
- 200: Messmodul
- 210: Batterieschalter

- e: Regelabweichung
- u: Steuergröße
- w: Führungsgröße
- x: Regelgröße
- y: Stellgröße
- z: Störgröße

- Uz: Zwischenkreisspannung
- W_{T}: Tretwiderstand

## Patentansprüche

1. Steuereinheit (1) zum Einsatz in einem Zwischenkreis (110) eines Fahrzeugs, insbesondere eines kettenlosen Lastenfahrrads (100), wobei der Zwischenkreis (110) einen Generator (120) und einen elektrischen Antrieb (130) elektrisch verbindet, aufweisend:
- ein Regelungsmodul (2), das dazu konfiguriert ist, einen Sollwert als Führungsgröße (w) und einen Istwert als Regelgröße (x) zu empfangen und eine Steuergröße (u) auszugeben, wobei die Regelgröße (x) und die Führungsgröße (w) dieselbe physikalische Dimension haben;
- ein Auswertemodul (3), das dazu konfiguriert ist, aus der Steuergröße (u) eine Stellgröße (y) zu bestimmen, die die Regelgröße (x) zumindest mittelbar derart beeinflusst, dass sich der Istwert dem Sollwert annähert; und
- eine Antriebsschnittstelle (5), die dazu konfiguriert ist, mit dem elektrischen Antrieb (130) zu kommunizieren, wobei die Steuereinheit (1) insbesondere ferner eine Generatorschnittstelle (4) aufweist, die dazu konfiguriert ist, von dem Generator (120) einen Generatorparameter zu empfangen; wobei
die Steuereinheit (1) dazu konfiguriert ist, eine Zwischenkreisspannung (Uz), die in dem Zwischenkreis (110) anliegt, zu ermitteln und als Regelgröße (x) heranzuziehen.

2. Steuereinheit (1) nach Anspruch 1, ferner aufweisend
einen Zustandsdetektor, der dazu konfiguriert ist, zu erkennen, ob eine Antriebsbatterieeinheit (140) aktiv an den Zwischenkreis (110) angeschlossen ist, wobei die Steuereinheit (1) insbesondere nur dann dazu konfiguriert ist, die Zwischenkreisspannung (Uz) als Regelgröße (x) heranzuziehen, wenn die Antriebsbatterieeinheit (140) nicht aktiv an den Zwischenkreis (110) angeschlossen ist.

3. Steuereinheit (1) nach Anspruch 2, die ferner dazu konfiguriert ist,
in dem Zustand, in dem die Antriebsbatterieeinheit (140) nicht aktiv an den Zwischenkreis (110) angeschlossen ist, eine Bremse des elektrischen Antriebs (130), die ein entgegen der Antriebsrichtung wirkendes Drehmoment aufnehmen kann, zu deaktivieren.

4. Steuereinheit (1) nach einem der Ansprüche 2-3, ferner aufweisend
eine Schaltereinrichtung zur Öffnung und Schließung eines Batterieschalters (210), der zwischen der Antriebsbatterieeinheit (140) und dem Zwischenkreis (110) angeordnet ist, wobei die Schaltereinrichtung dazu konfiguriert ist, den Batterieschalter (210) zu öffnen, wenn der Zustandsdetektor erkannt hat, dass die Antriebsbatterieeinheit (140) nicht aktiv an den Zwischenkreis (110) angeschlossen ist, wobei der Batterieschalter (210) insbesondere Bestandteil eines Batteriemanagementsystems der Antriebsbatterieeinheit (140) ist.

5. Steuereinheit (1) nach einem der vorigen Ansprüche, wobei
die Stellgröße (y) eine Antriebsleistung des elektrischen Antriebs (130) ist, wobei die Antriebsschnittstelle (5) dazu konfiguriert ist, dem elektrischen Antrieb (130) die Antriebsleistung vorzugeben, sodass über die Antriebsleistung die Zwischenkreisspannung (Uz) einstellbar ist.

6. Steuereinheit (1) nach einem der vorigen Ansprüche, wobei
die Generatorschnittstelle (4) dazu konfiguriert ist, den Generator (120) erst dann zu aktivieren, wenn die Zwischenkreisspannung (Uz) einen ersten Schwellwert (S1) erreicht hat.

7. Steuereinheit (1) nach einem der vorigen Ansprüche, wobei
die Antriebsschnittstelle (5) dazu konfiguriert ist, dem elektrischen Antrieb (130) die Stellgröße (y) erst auszugeben, wenn die Zwischenkreisspannung (Uz) einen zweiten Schwellwert (S2) erreicht hat.

8. Steuereinheit (1) nach einem der vorigen Ansprüche, wobei
das Auswertemodul (3) die Stellgröße (y) mittels eines Faktors (F) bestimmt, mit dem der Generatorparameter zu verrechnen, insbesondere zu multiplizieren, ist, um die Antriebsleistung als Stellgröße (y) zu erhalten.

9. Steuereinheit (1) nach Anspruch 8, wobei
der Faktor (F) in Abhängigkeit des Generatorparameters variiert und insbesondere in einem Bereich zwischen 0,5 und 1,5, ferner insbesondere 0,8 und 1,2, liegt.

10. Steuereinheit (1) nach einem der vorigen Ansprüche, die dazu konfiguriert ist,
bei einer Verringerung des Generatorparameters die Antriebsleistung des Antriebs (130) zu verringern, um die Zwischenkreisspannung (Uz) zu erhöhen und/oder bei einer Erhöhung des Generatorparameters die Antriebsleistung des Antriebs (130) zu erhöhen, um die Zwischenkreisspannung (Uz) zu verringern.

11. Steuereinheit (1) nach einem der vorigen Ansprüche, wobei
der Generatorparameter von einer fluktuierenden Tretleistung, insbesondere proportional, abhängt, die eine Nutzerin dem Fahrzeug zuführt.

12. Steuereinheit (1) nach einem der vorigen Ansprüche, wobei
der Sollwert der Zwischenkreisspannung voreinstellbar ist und der Istwert der Zwischenkreisspannung um weniger als 15%, insbesondere weniger als 10%, von dem Sollwert der Zwischenkreisspannung abweicht, wobei die Abweichung von einer Taktung der Steuereinheit abhängt.

13. Generatoreinheit (160) zur Einbindung in einen Zwischenkreis (110), aufweisend
- eine Steuereinheit (1) nach einem der vorigen Ansprüche; und
- den Generator (120), der insbesondere in eine Tretkurbel eines Lastenfahrrads (100) integrierbar ist.

14. Fahrzeug aufweisend
- eine Generatoreinheit (160) nach Anspruch 13;
- eine Motoreinheit (170), die den elektrischen Antrieb (130) und eine Antriebssteuereinheit (6) zur Anpassung einer Antriebsleistung des elektrischen Antriebs (130) umfasst; und
- den Zwischenkreis (110);
wobei der elektrische Antrieb (130) und der Generator (120) rein elektrisch miteinander gekoppelt sind.

15. Fahrzeug nach Anspruch 14, ferner aufweisend
eine Antriebsbatterieeinheit (140), die dem Zwischenkreis (100) wahlweise zuschaltbar ist, wobei insbesondere ein Zustandsdetektor erkennt, ob die Antriebsbatterieeinheit (140) aktiv an den Zwischenkreis (100) angeschlossen ist.

16. Fahrzeug nach einem der Ansprüche 14-15, wobei
das Fahrzeug ein kettenloses Lastenfahrrad (100) ist, das eine Tretkurbel und eine Hinterradbaugruppe hat, wobei der Generator (120) in die Tretkurbel und der elektrische Antrieb (130) in die Hinterradbaugruppe integriert ist.

17. Verfahren zum Anpassen einer Antriebsleistung eines elektrischen Antriebs (130) eines Fahrzeugs, insbesondere eines kettenlosen Lastenfahrrads (100), an eine Ausgangsleistung eines Generators (120) des Fahrzeugs, aufweisend die folgenden Schritte:
a Erfassen eines Istwerts einer Zwischenkreisspannung (Uz), die in einem Zwischenkreis anliegt, der den Generator (120) und den elektrischen Antrieb (130) elektrisch verbindet;
b Erfassen eines Generatorparameters, insbesondere einer Generatorleistung, die insbesondere von einer fluktuierenden Tretleistung abhängt, die eine Nutzerin dem Fahrzeug zuführt;
c Erfassen eines Sollwerts der Zwischenkreisspannung (Uz), der insbesondere voreinstellbar ist;
d Erfassen einer Regelabweichung zwischen dem Istwert der Zwischenkreisspannung (Uz) und dem Sollwert der Zwischenkreisspannung (Uz);
e Anpassen der Antriebsleistung des elektrischen Antriebs (130) in Abhängigkeit der Regelabweichung.

18. Verfahren nach Anspruch 17, wobei nach dem Erfassen der Regelabweichung und vor dem Anpassen der Antriebsleistung folgende Schritte ablaufen:
- Bestimmen eines Faktors (F), anhand dessen sich aus der Generatorleistung eine Antriebsleistung ergibt, insbesondere indem die Generatorleistung mit dem Faktor (F) multipliziert wird, und Bestimmen der Antriebsleistung;
- Übermitteln der Antriebsleistung an eine Antriebssteuereinheit (6);
- Anpassen der Antriebsleistung des elektrischen Antriebs (130) an die übermittelte Antriebsleistung, um den Istwert der Zwischenkreisspannung (Uz) an den Sollwert der Zwischenkreisspannung (Uz) anzupassen.

19. Verfahren nach einem der Ansprüche 17-18, wobei
die Schritte a bis e kontinuierlich durchgeführt werden, um bei der fluktuierenden Generatorleistung die Antriebsleistung variabel derart zu bestimmen, dass der im Wesentlichen konstante Sollwert der Zwischenkreisspannung (Uz) kontinuierlich geregelt wird.

20. Verfahren nach einem der Ansprüche 17-19, wobei
das Erfassen der Generatorleistung nach Schritt b erst dann durchgeführt wird, wenn die Zwischenkreisspannung (Uz) einen ersten Schwellwert (S1) überschritten hat.

21. Verfahren nach einem der Ansprüche 17-20, wobei
das Anpassen der Antriebsleistung nach Schritt e erst dann durchgeführt wird, wenn die Zwischenkreisspannung (Uz) einen zweiten Schwellwert (S2) überschritten hat.
